(19) Europäisches Patentamt
European Patent Office
Office européen des brevets

(11) **EP 3 533 371 B1**

(12) **EUROPEAN PATENT SPECIFICATION**

(45) Date of publication and mention
of the grant of the patent:
**13.08.2025 Bulletin 2025/33**

(21) Application number: **17864159.3**

(22) Date of filing: **31.10.2017**

(51) International Patent Classification (IPC):
*A47L 13/17* $^{(2006.01)}$  *B32B 5/26* $^{(2006.01)}$
*D04H 1/435* $^{(2012.01)}$  *D04H 1/4374* $^{(2012.01)}$

(52) Cooperative Patent Classification (CPC):
**D04H 1/5412; A47L 13/17; B32B 5/26;**
**D04H 1/435; D04H 1/4374; D04H 1/5418**

(86) International application number:
**PCT/JP2017/039311**

(87) International publication number:
**WO 2018/079827 (03.05.2018 Gazette 2018/18)**

(54) **WET SHEET FOR CLEANING AND METHOD FOR PRODUCING WET SHEET FOR CLEANING**

NASSBLATT ZUR REINIGUNG UND VERFAHREN ZUR HERSTELLUNG EINES NASSBLATTES ZUR REINIGUNG

FEUILLE HUMIDE DE NETTOYAGE ET PROCÉDÉ DE FABRICATION DE FEUILLE HUMIDE DE NETTOYAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2016 JP 2016213863**

(43) Date of publication of application:
**04.09.2019 Bulletin 2019/36**

(73) Proprietor: **Daio Paper Corporation**
**Ehime 799-0492 (JP)**

(72) Inventor: **SHINTANI, Naoki**
**Shikokuchuo-shi**
**Ehime 799-0492 (JP)**

(74) Representative: **Meissner Bolte Partnerschaft mbB**
**Patentanwälte Rechtsanwälte**
**Postfach 86 06 24**
**81633 München (DE)**

(56) References cited:
EP-A1- 1 967 626          WO-A1-2013/179747
JP-A- 2002 238 822      JP-A- 2006 016 733
JP-A- 2011 224 385      JP-A- 2012 100 950
JP-A- 2014 113 409      JP-A- 2014 129 632
US-A1- 2014 366 294

## Description

### Technical Field

The present invention relates to a wet sheet for cleaning and a method for producing the wet sheet for cleaning.

### Background Art

Conventionally, there have been known wet sheets for cleaning which are made of sheet material impregnated with chemical solution. Some of such wet sheets are formed with multiple layers, where hydrophilic fiber such as rayon is provided as an inner layer and hydrophobic fiber such as polypropylene is provided as an outer layer, and the hydrophilic fiber of the inner layer is impregnated with chemical solution (ex. Patent Document 1).

### Citation List

### Patent Literature

[Patent Document 1]: Japanese Patent No.4033612

Moreover, EP 1 967 626 A1 reveals a wet sheet according to the preamble of claim 1.

### Summary of Invention

### Technical Problem

However, the wet sheet for cleaning described in Patent Document 1 is wet on the surface, which increases the frictional resistance with the floor surface in the cleaning of the floor and requires a high load for the wet sheet to slide on the floor surface, for example. The load is placed onto the wet sheet for cleaning, and the chemical solution with which the sheet is impregnated is excessively discharged. Then the wet sheet for cleaning is short of the chemical solution sooner. Thus, problematically, the surface to be cleaned may not be cleaned sufficiently.

The impregnation rate of the chemical solution or the grammage of the wet sheet for cleaning may be increased as a countermeasure to avoid the shortage of the chemical solution. However, it may increase the cost of producing the wet sheet for cleaning and decrease the price competitiveness as daily goods.

An object of the present invention is to provide a wet sheet for cleaning at a low price which may be used to wipe a larger area while discharging chemical solution by restraint of excessive discharge of the chemical solution and a method for producing the wet sheet for cleaning.

### Solution to Problem

In order to solve the above problems, a wet sheet according the present invention is defined in claim 1.

According to the invention of claim 1, as the inner layer contains pulp by equal to or more than 50 wt%, has a grammage of 20 to 75 g/m$^2$, and occupies 20 to 70% of the total mass of the wet sheet for cleaning, the chemical solution with which the sheet is impregnated is not excessively discharged and the wet sheet for cleaning may not be short of the chemical solution soon. As a result, the surface to be cleaned may be cleaned sufficiently. Moreover, as the hydrophobic fiber inner layer is adjacent to either of the hydrophobic fiber layers, the chemical solution with which the hydrophilic fiber inner layer is impregnated is not easily discharged to the side of the hydrophobic fiber layer adjacent to the hydrophobic fiber inner layer.

Thus, a larger area may be wiped while the chemical solution is being discharged.

The inner layer is mainly composed of pulp, which is cheaper than rayon. As pulp is used, the cost of the wet sheet for cleaning may be decreased and the price competitiveness as daily goods may be maintained or improved.

The present invention described in claim 2 is the wet sheet for cleaning according to claim 1, wherein the hydrophobic fiber of the outer layers includes polyethylene terephthalate fiber at a rate of 80% or more and a fiber diameter of the polyethylene terephthalate fiber is 3.3 dtex or more.

According to the invention of claim 2, the effects equal to the invention of claim 2 may be consistently achieved. Moreover, the polyethylene terephthalate fiber of the outer layers with a fiber diameter equal to or more than 3.3 dtex improves the rigidity (cushioning property) of the fiber, making it possible to handle it with a little force. Moreover, the polyethylene terephthalate fiber with a large fiber diameter equal to or more than 3.3 dtex may keep inter-fiber voids not to cause capillary actions easily and prevent the chemical solution to be discharged from the inner layer to the outer layers.

The present invention described in claim 3 is the wet sheet for cleaning according to claim 1 or 2, including an interlaced part where the outer layers and the inner layer are interlaced.

According to the invention of claim 3, the effects equal to the invention of claim 1 or 2 may be consistently achieved. Moreover, with the interlaced parts where the outer layers and the inner layer are interlaced, the chemical solution may be restrained more certainly from being excessively discharged.

The present invention described in claim 4 is a method for producing the wet sheet for cleaning according to claim 3, wherein the interlaced part is formed by water-jet interlacing.

According to the invention of claim 4, the effects equal to the invention of claim 3 may be consistently achieved. Moreover, as the interlaced part is interlaced by the water-jet interlacing which allows interlacing of the inner layer and the outer layers to be interlaced without adhesion agent, a simple configuration is possible and the surface from which the chemical solution is discharged is not blocked by adhesion agent, which may prevent the unevenness of wiping.

## Advantageous Effects of Invention

The present invention may achieve a low price and increase an area to be wiped while chemical solution is being discharged by restraint of excessive discharge of the chemical solution.

## Brief Description of Drawings

FIG. 1 is a schematic perspective view of the wet sheet for cleaning in an embodiment of the present invention.
FIG. 2 is a schematic cross-sectional view of the wet sheet for cleaning in an embodiment of the present invention.
FIG. 3 is a schematic perspective exploded view of the wet sheet for cleaning in an embodiment of the present invention.
FIG. 4 is a schematic drawing of a pattern of the wet sheet for cleaning in an embodiment of the present invention.

## Description of Embodiments

Hereinafter, the wet sheet for cleaning as an embodiment of the present invention is described in detail with reference to the drawings.

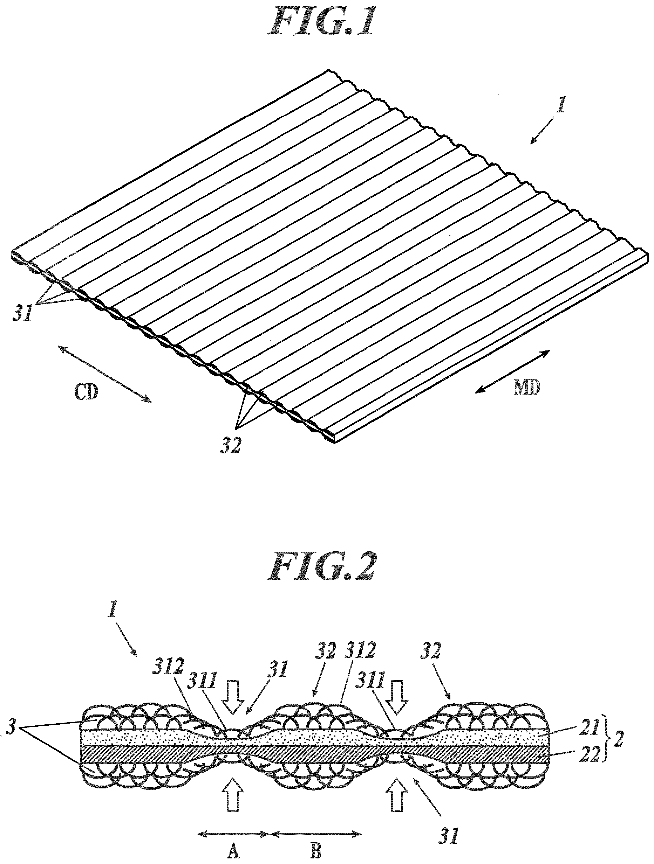

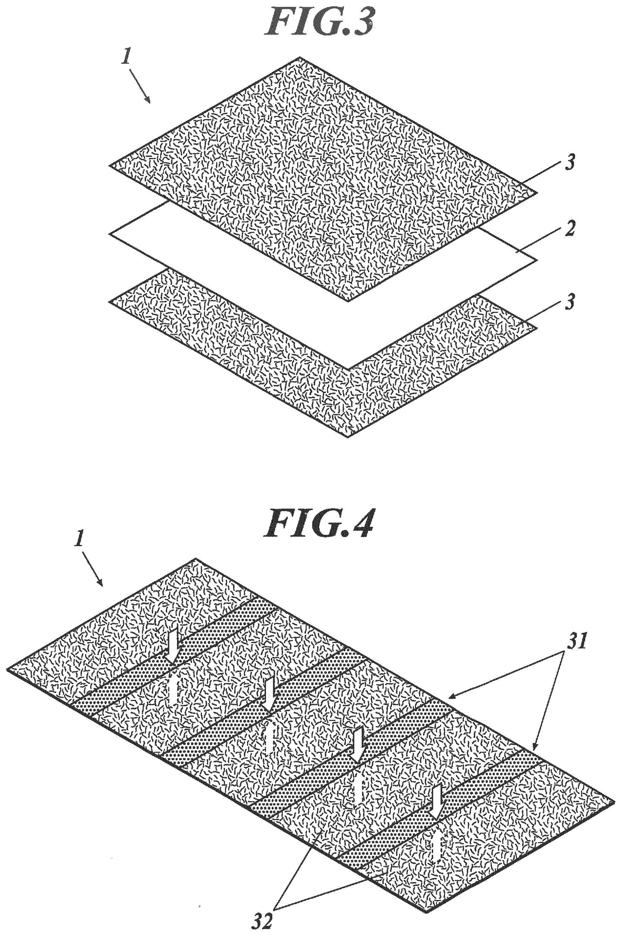

The wet sheet for cleaning in the embodiment of the present invention is described on the basis of FIGs. 1 to 4.

The wet sheet for cleaning 1 is provided with an inner layer 2 and outer layers 3 which are hydrophobic fiber layers as shown in FIGs. 1 to 4.

The inner layer 2 is an intermediate layer which is arranged between the outer layers 3 described later. The basic structure of the inner layer 2 is a structure with a hydrophilic fiber inner layer 21 and a hydrophobic fiber inner layer 22, which may be a two-layer structure, a multiple-layer structure with hydrophilic fiber inner layers 21 and hydrophobic fiber inner layers 22 being layered, or a mixed cotton of hydrophilic fiber and hydrophobic fiber.

The inner layer 2 is formed to have a grammage of equal to or more than 20 g/m$^2$, and a mass ratio of 20 to 70% to the whole mass of the wet sheet for cleaning 1.

The hydrophilic fiber inner layer 21 is a layer with hydrophilic fiber, and is arranged adjacent to an outer layer 3 which is the front surface layer of the outer layers 3 described later (the front surface layer here refers to the surface mainly sliding on the surface to be cleaned compared to the back surface layer) .

According to the present invention, the hydrophilic fiber inner layer 21 is impregnated with the chemical solution described later. Pulp is mainly used as the hydrophilic fiber, and pulp is used in an amount equal to or more than 50 wt% to the total mass of the inner layer 2.

Natural fiber such as cotton and hemp and cellulosic chemical fiber such as acetate may be used with pulp as the hydrophilic fiber. However, according to the present invention rayon is not included in the hydrophilic fiber.

The inner layer 2 contains pulp by equal to or more than 50 wt%, has a grammage of 20 to 75 g/m$^2$, and occupies 20 to 70% of the total mass of the wet sheet for cleaning because the chemical solution is not certainly retained in the inner layer 2 if the conditions are below those and because the amount of the chemical solution and the weight of the sheet are larger to cause the sense of wiping and handling to be heavier if the conditions are above those.

The hydrophobic fiber inner layer 22 is a layer with hydrophobic fiber and is arranged adjacent to an outer layer 3 which is the back surface layer. Resin fiber such as polyethylene terephthalate, polypropylene, and polyethylene is used as the hydrophobic fiber.

Under some conditions of the sort of pulp or its contained amount, etc., pulp may not be sufficiently durable as the hydrophilic fiber inner layer 21 or may be unpreferable in terms of the size stability. In such a case, the durability of the sheet or the stability of the size may be kept by the hydrophobic fiber inner layer 22.

The chemical solution is used as cleaning detergent of the wet sheet for cleaning 1 and is to be discharged from the front surface layer or the back surface layer through the outer layers 3 described later. The chemical solution is prepared with a viscosity of 1 to 15 mPa·s at 25°C. The viscosity is measured using the Brookfield (B-type) rotational viscometer (model number: LVDV-I+) and the rotor to be used and the rotational frequency are suitably changed depending on the viscosity of the liquid detergent. The measurement is performed in conformity with JIS K 7117-1:1999 under the condition that the temperature is 25°C and the rotational frequency is 60 rpm.

A lower alcohol such as ethanol, a surfactant such as benzalkonium chloride, a bactericide, and propylene glycol monomethyl ether (PGME) dissolved in water are used as the chemical solution, for example.

In this embodiment, the inner layer 2 has the hydrophobic fiber inner layer 22 adjacent to a side of the hydrophilic fiber inner layer 21, though not limited thereto. For example, the hydrophilic fiber inner layer 21 adjacent to the hydrophobic fiber inner layers 22 on the both sides of the hydrophilic fiber inner layer 21 are put between the hydrophobic fiber inner layers 22.

The outer layers 3 form the front surface layer and the back surface layer of the wet sheet for cleaning 1, and each layer is formed with hydrophobic fiber. Chemical fiber mainly composed of polyethylene terephthalate, polypropylene, polyethylene, etc. are used as the hydrophobic fiber. The polyethylene terephthalate fiber is preferably included at a rate equal to or more than 80%, and the fiber diameter is preferably equal to or more than 3.3 dtex.

With the fiber diameter equal to or more than 3.3 dtex, the rigidity (cushioning property) of the fiber improves, making it possible to handle it with a little force. Moreover, polyethylene terephthalate fiber with a large fiber diameter equal to or more than 3.3 dtex may keep inter-fiber voids not to cause capillary actions easily and prevent the chemical solution to be discharged from the inner layer 2 to the outer layers 3.

The outer layer 3 includes an interlaced part 31 and a non-interlaced part 32.

The interlaced part 31 is a part where the inner layer 2 and the outer layers 3 are combined by interlacing of the fibers of the layers. The water-jet interlacing is used as the method of interlacing of the interlaced part 31. Specifically, water is poured to the whole area with a small water pressure of less than 20 kPa to combine the inner layer 2 and the outer layers 3 in pre-interlacing, and after that, the water-jet interlacing is done for a part to be the interlaced part 31 with a water pressure of 60 to 80 kPa. In such a way, the shape with a pattern of bumps and dents is formed.

Water hits the same spots on the front surface layer and the back surface layer from the both sides of the wet sheet for cleaning 1 in the water-jet interlacing. Accordingly, the interlaced part 31 is formed such that the pattern of bumps and dents on the front surface layer corresponds to that on the back surface layer at the same spots.

The fibers of the inner layer 2 and the outer layers 3 are entangled as a result of the water-jet interlacing and the fiber density is high at the interlaced part 31. Thus, the fibers of the hydrophobic fiber forming the interlaced part 31 are not spatially free compared to the non-interlaced part 32 described later, and the fibers at the inter-laced part 31 do not move freely in a wiping action compared to those at the non-interlaced part 32.

The interlaced part 31 is indented in a dent shape compared to the non-interlaced part 32 described later because of the high fiber density. That is, the interlaced part 31 includes a bottom 311 which is the bottom of the dent and an inclined part 312 which is an inclined surface connecting the non-interlaced part 32 described later and the bottom 311.

The interlaced part 31 is extended along the direction (direction MD) perpendicular to the direction of wiping (direction CD) when the wet sheet for cleaning 1 is used. The interlaced parts 31 are formed in multiple rows separated at predetermined intervals. Those interlaced parts 31 are formed to have an area ratio of 30 to 80% to the surface area of the front surface layer or the back surface layer of the wet sheet for cleaning 1 in a plan view. Here, the area ratio represents a ratio between the interlacing surface A and the non-interlacing surface B, where the interlacing surface A is a surface area of the interlaced parts 31 in a plan view and the non-interlaced surface B is a surface area of the non-interlaced parts 32 in a plan view. The area ratio is calculated by the following formula.

$$\text{Area ratio (\%)} = A/(A+B) \times 100 \quad \text{...(Formula 1)}$$

Nonwoven fabric mainly composed of polyethylene terephthalate, polypropylene, polyethylene, etc. is used as the hydrophobic fiber.

The non-interlaced part 32 is a part where only the pre-interlacing is done for the inner layer 2 and the outer layers 3, but not the water-jet interlacing.

The non-interlaced part 32 is with a lower fiber density compared to the interlaced part 31 because the water-jet interlacing is not done, and the fibers at this part may move freely in the wiping action compared to the fibers at the interlaced part 31.

The interlaced parts 31 and the non-interlaced parts 32 are arranged alternately along the wiping direction, and the surface to be cleaned first touches the non-interlaced part 32 only.

The pre-interlacing is not included in the water-jet interlacing process in the description. That is, defined as the water-jet interlacing is only the fiber interlacing process where water is poured with a high water pressure after the pre-interlacing. Thus, the non-interlaced part 32 for which the pre-interlacing only is done is, strictly speaking, slightly interlaced with the pre-interlacing but is treated as a part not interlaced, for convenience.

The static friction resistance value and the kinetic friction resistance value of the outer layer 3 are decreased in wiping of the surface to be cleaned compared to the case where the interlaced part 31 is not provided.

To sum up, as the friction resistance value is small when the surface to be cleaned is wiped with the wet sheet for cleaning 1, a light touch of wiping may be obtained.

According to this embodiment, as the inner layer 2 contains pulp by equal to or more than 50 wt%, has a grammage of 20 to 75 g/m$^2$, and occupies 20 to 70% of the total mass of the wet sheet for cleaning 1, the chemical solution with which the sheet is impregnated is not excessively discharged and the wet sheet for cleaning 1 may not be short of the chemical solution soon. As a result, the surface to be cleaned may be cleaned sufficiently.

The inner layer 2 is mainly composed of pulp, which is cheaper than rayon. As pulp is used, the cost of the wet sheet for cleaning 1 may be decreased and the price competitiveness as daily goods may be maintained or improved.

As the hydrophobic fiber inner layer 22 is adjacent to the back surface layer of the outer layers 3, the chemical solution with which the hydrophilic fiber inner layer 21 is impregnated is not easily discharged to the side of the outer layer 3 adjacent to the hydrophobic fiber inner layer 22.

Thus, the chemical solution may be selectively discharged to the side of the front surface layer of the outer layers 3, which may restrain discharge of the chemical solution not effective for cleaning.

According to this embodiment, as the wet sheet for cleaning 1 is provided with the interlaced parts 31 where the outer layers 3 and the inner layer 2 are interlaced, the chemical solution may be restrained more certainly from being excessively discharged.

According to this embodiment, as the front surface layer and the back surface layer are configured with hydrophobic fiber, the chemical solution with which the hydrophilic fiber inner layer 21 is impregnated may be suitably retained and discharged in an adjusted amount.

According to this embodiment, as the interlaced part 31 is interlaced by the water-jet interlacing which allows interlacing of the inner layer 2 and the outer layers 3 to be interlaced without adhesion agent, a simple configuration is possible and the surface from which the chemical solution is discharged is not blocked by adhesion agent, which may prevent the unevenness of wiping.

**Examples**

[Example 1]

In Example 1, the wet sheet for cleaning 1 as shown below was used.

Nonwoven fabric mainly composed of polyethylene terephthalate was used for the outer layers 3.

Chemical fiber mainly composed of polyethylene terephthalate, polypropylene, polyethylene, etc. was used as the hydrophobic fiber.

Specifically, the outer layer 3 was composed of hydrophobic fiber by 100%, where polyethylene terephthalate was contained by 90% as hydrophobic fiber and core-sheath fiber of polypropylene and polyethylene was contained by 10% as binder fiber. The polyethylene terephthalate fiber of 3.3 dtex in fineness and the binder fiber of 1.7 dtex in fineness were used.

As for the inner layer 2, the hydrophilic fiber inner layer 21 was composed of pulp of 50 g/m$^2$ in grammage, and the hydrophobic fiber inner layer 22 was composed of 2.9 dtex PP spunbond nonwoven fabric of 20 g/m$^2$ in grammage. The inner layer 2 as a whole contained pulp by 71 wt% and hydrophobic fiber by 29 wt%.

Surfactants (anionic surfactant, nonionic surfactant, cationic surfactant and amphoteric surfactant) and water-soluble solvents (monohydric alcohol or polyhydric alcohol) in water as a solvent were used for the chemical solution. Used in this embodiment were Prestall by 1% as nonionic surfactant, lauryldimethylamine oxide by 0.5% as amphoteric surfactant, ethanol by 3.4% and 1-methoxy-2-propanol by 1.4% as alcohol, and Benzalkonium chloride by 0.05% as quaternary ammonium salt.

The grammage of the wet sheet for cleaning 1 was 116 g/m$^2$.

The ratio of the inner layer 2 to the wet sheet for cleaning 1 as a whole (inner layer/wet sheet for cleaning) was 60%.

The area ratio of the interlaced part of the outer layer 3 was 50%. The impregnation rate of the chemical solution was 300%.

[Example 2]

In Example 2, the wet sheet for cleaning 1 as shown below was used.

As for the inner layer 2, the hydrophilic fiber inner layer 21 was composed of pulp of 49 g/m$^2$ in grammage, and the hydrophobic layer inner layer 22 was composed of 2.9 dtex PP spunbond nonwoven fabric of 26 g/m$^2$ in grammage. The inner layer 2 as a whole contained pulp by 65 wt% and hydrophobic fiber by 35 wt%.

The grammage of the wet sheet for cleaning 1 was 127 g/m$^2$.

The ratio of the inner layer 2 to the wet sheet for cleaning 1 (inner layer/wet sheet for cleaning) was 59%.

The configurations besides the above were the same as those of Example 1.

[Example 3]

In Example 3, the wet sheet for cleaning 1 as shown below was used.

As for the inner layer 2, the hydrophilic fiber inner layer 21 was composed of pulp of 48 g/m$^2$ in grammage, and the hydrophobic layer inner layer 22 was composed of 2.9 dtex PP spunbond nonwoven fabric of 12 g/m$^2$ in grammage. The inner layer 2 as a whole contained pulp by 80 wt% and hydrophobic fiber by 20 wt%.

The grammage of the wet sheet for cleaning 1 was 105 g/m$^2$.

The ratio of the inner layer 2 to the wet sheet for cleaning 1 (inner layer/wet sheet for cleaning) was 57%.

The area ratio of the interlaced part of the outer layer 3 was 30%.

The configurations besides the above were the same as those of Example 1.

[Example 4]

In Example 4, the wet sheet for cleaning 1 as shown below was used.

As for the inner layer 2, the hydrophilic fiber inner layer 21 was composed of pulp of 26 g/m$^2$ in grammage, and the hydrophobic layer inner layer 22 was composed of 2.9 dtex PP spunbond nonwoven fabric of 24 g/m$^2$ in grammage. The inner layer 2 as a whole contained pulp by 52 wt% and hydrophobic fiber by 48 wt%.

The grammage of the wet sheet for cleaning 1 was 75 g/m$^2$.

The ratio of the inner layer 2 to the wet sheet for cleaning 1 (inner layer/wet sheet for cleaning) was 67%.

The area ratio of the interlaced part of the outer layer 3 was 80%.

The configurations besides the above were the same as those of Example 1.

[Comparative Example 1]

In Comparative Example 1, the wet sheet for cleaning 1 as shown below was used.

The inner layer 2 was made of two hydrophilic fiber inner layers. The rayon layer had a grammage of 56 g/m$^2$ and the pulp layer had a grammage of 14 g/m$^2$. The inner layer 2 as a whole contained rayon by 80 wt% and pulp by 20 wt%, being interlaced.

The grammage of the wet sheet for cleaning 1 was 110 g/m$^2$.

The ratio of the inner layer 2 to the wet sheet for cleaning 1 (inner layer/wet sheet for cleaning) was 64%.

The area ratio of the interlaced part of the outer layer 3 was 80%.

The configurations besides the above were the same as those of Example 1.

[Comparative Example 2]

In Comparative Example 2, the wet sheet for cleaning 1 as shown below was used.

The inner layer 2 was made of pulp of 15 g/m$^2$ in grammage. The inner layer 2 as a whole contained pulp by 100 wt%.

The grammage of the wet sheet for cleaning 1 was 120 g/m$^2$.

The ratio of the inner layer 2 to the wet sheet for cleaning 1 (inner layer/wet sheet for cleaning) was 13%.

The area ratio of the interlaced part of the outer layer 3 was 52%.

The configurations besides the above were the same as those of Example 1.

[Comparative Example 3]

In Comparative Example 3, the wet sheet for cleaning 1 as shown below was used.

As for the inner layer 2, the hydrophilic fiber inner layer 21 was composed of pulp of 36 g/m$^2$ in grammage, and the hydrophobic layer inner layer 22 was composed of 2.9 dtex PP spunbond nonwoven fabric of 44 g/m$^2$ in grammage. The inner layer 2 as a whole contained pulp by 45 wt% and hydrophobic fiber by 55 wt%.

The grammage of the wet sheet for cleaning 1 was 130 g/m$^2$.

The ratio of the inner layer 2 to the wet sheet for cleaning 1 (inner layer/wet sheet for cleaning) was 62%.

The area ratio of the interlaced part of the outer layer 3 was 60%.

The configurations besides the above were the same as those of Example 1.

The test to count the number of times of wiping off was executed using the wet sheets for cleaning 1 in Examples 1 to 4 and Comparative Examples 1 to 3 described above.

The method of the test to count the number of times of wiping off involved attaching the wet sheet for cleaning 1 to a tool for fixing the wet sheet for cleaning 1 (Quickle Wiper/year of production 2015, Kao Corporation) without slack and wiping the floor surface formed by an acryl board in one direction. An action of wiping off from edge to edge of the acryl board floor surface along the longitudinal direction of the acryl board floor surface (length 90 cm, width 130 cm) with the fixing tool of 25 cm in width was counted as one time.

1. The angle between the floor surface and the shaft of the fixing tool was 60°, and the root of the shaft of the head was fixed with a commercially available bond so as not to vary the angle.

2. A weight of 530 g in a cylindrical shape (diameter 100 mm, length 200 mm) was put through the shaft of the head and a sheet was attached.

3. In the measurement, a commercially available acryl board of 1300 mm in width and 900 mm in depth was used as a floor surface, and the shaft of the fixing tool was inclined to the front side such that the angle between the floor surface and the shaft of the fixing tool was 60°. The cleaning was done from the front to the back at a speed of 300 mm/s.

4. Cleaning was done sequentially in the width direction of the acryl board floor surface so as not to be done overly on a part which was formerly cleaned.

5. The remaining solution of the wet sheet for cleaning was removed completely with a dry cloth before the next measurement.

The end point was defined as a state where the chemical solution was not discharged in the whole width of the wet sheet for cleaning 1, and the number of times the floor surface was wiped before the end point (number of times of effective wiping action) was measured under the condition described above.

6. In other words, the end point was the timing when a part where discharge of the chemical solution onto the floor surface was clearly not recognized appeared as a trace of wiping and a state where the chemical solution was dried up intermediately and not discharged appeared in the whole width.

7. The wiping action which included the end point was not included in the number of times in the measurement. The effective wiped area was calculated by the following formula.

The effective wiped area ($m^2$) = 0.25×0.9m× (number of times)

The test described above was repeated 5 times and the measured value was to be the average value of the number of times of effective wiping action and the average value of the effective wiped area.

The test results to count the number of times of wiping off are shown in Table 1.

[Table 1]

| | | EXAMPLE 1 | EXAMPLE 2 | EXAMPLE 3 | EXAMPLE 4 | COMPARATIVE EXAMPLE 1 | COMPARATIVE EXAMPLE 2 | COMPARATIVE EXAMPLE 3 |
|---|---|---|---|---|---|---|---|---|
| INNER LAYER COMPOSITION | RAYON | 0% | 0% | 0% | 0% | 80% | 0% | 0% |
| | PULP | 71% | 65% | 80% | 52% | 20% | 100% | 45% |
| | HYDROPHOBIC FIBER | 29% | 35% | 20% | 48% | 0% | 0% | 55% |
| CHEMICAL SOLUTION IMPREGNATION RATE | | 300% | 300% | 300% | 300% | 300% | 300% | 300% |
| INTERLACED AREA RATIO | | 50% | 50% | 30% | 80% | 80% | 52% | 60% |
| GRAMMAGE OF WET SHEET FOR CLEANING | $g/m^2$ | 116 | 127 | 105 | 75 | 110 | 120 | 130 |
| GRAMMAGE OF INNER LAYER | $g/m^2$ | 70 | 75 | 60 | 50 | 70 | 15 | 80 |
| GRAMMAGE OF PULP | $g/m^2$ | 50 | 49 | 48 | 26 | 14 | 15 | 36 |
| RATIO OF GRAMMAGE OF PULP OF INNER LAYER/GRAMMAGE OF WET SHEET FOR CLEANING | | 43% | 38% | 46% | 35% | 13% | 13% | 28% |
| NUMBER OF TIMES OF EFFECTIVE WIPING ACTION | times | 58 | 45 | 51 | 45 | 33 | 12 | 29 |
| EFFECTIVE WIPED AREA | $m^2$ | 13.1 | 10.1 | 11.5 | 10.1 | 7.4 | 2.7 | 6.5 |

EP 3 533 371 B1

The results shown in Table 1 are as follows.

In all of Examples 1 to 4, the number of times of effective wiping action in which the chemical solution was recognized in the whole width of the wet sheet for cleaning 1 was equal to or more than 45 times. The effective wiped area was equal to or larger than 10.1 $m^2$ in all of Examples 1 to 4.

Compared to those, in Comparative Examples 1 to 3, the number of times of effective wiping action was equal to or less than 33 times, and the effective wiped area was equal to or smaller than 7.4 $m^2$.

**Industrial Applicability**

The present invention is suitably applicable for a wet sheet for cleaning and a method for producing it.

**Reference Signs List**

| | |
|---|---|
| 1 | Wet Sheet for Cleaning |
| 2 | Inner Layer |
| 3 | Outer Layer (Hydrophobic Fiber Layer) |
| 21 | Hydrophilic Fiber Inner Layer |
| 22 | Hydrophobic Fiber Inner Layer |
| 31 | Interlaced Part |
| 32 | Non-interlaced Part |
| 311 | Bottom |
| 312 | Inclined Part |
| A | Interlaced Surface |
| B | Non-interlaced Surface |

**Claims**

1. A wet sheet for cleaning (1) comprising multiple layers and being impregnated with chemical solution, the wet sheet for cleaning (1) comprising:

   outer layers (3) which are made of hydrophobic fiber and which are each arranged on a front surface and a back surface;
   an inner layer (2) which has hydrophilic fiber and which is arranged between the outer layers (3),
   wherein the inner layer (2) is provided with a hydrophilic fiber inner layer (21) with the hydrophilic fiber and a hydrophobic fiber inner layer (22) with hydrophobic fiber,
   wherein the hydrophobic fiber inner layer (22) is adjacent to at least one of the outer layers (3), **characterised in that** the hydrophilic fiber inner layer (21) is impregnated with the with chemical solution and wherein rayon is not included in the hydrophilic fiber, and
   the inner layer (2) includes pulp by 50 wt% or more, has a grammage of 20 to 75 g/$m^2$, and occupies 20 to 70% of a total mass of the wet sheet for cleaning (1).

2. The wet sheet for cleaning (1) according to claim 1, wherein the hydrophobic fiber of the outer layers (3) includes polyethylene terephthalate fiber at a rate of 80% or more and a fiber diameter of the polyethylene terephthalate fiber is 3.3 dtex or more.

3. The wet sheet for cleaning (1) according to claim 1 or 2, comprising an interlaced part (31) where the outer layers (3) and the inner layer (2) are interlaced.

4. A method for producing the wet sheet (1) for cleaning according to claim 3, wherein the interlaced part (31) is formed by water-jet interlacing.

**Patentansprüche**

1. Feuchttuch zum Reinigen (1), umfassend mehrere Lagen und imprägniert mit einer chemischen Lösung, wobei das Feuchttuch zum Reinigen (1) Folgendes umfasst:

äußere Lagen (3), die aus hydrophoben Fasern bestehen und jeweils auf einer Vorderseite und einer Rückseite angeordnet sind,

eine innere Lage (2), die hydrophile Fasern aufweist und zwischen den äußeren Lagen (3) angeordnet ist,

wobei die innere Lage (2) mit einer inneren Lage aus hydrophilen Fasern (21) mit den hydrophilen Fasern und einer inneren Lage aus hydrophoben Fasern (22) mit hydrophoben Fasern versehen ist,

wobei die innere Lage aus hydrophoben Fasern (22) neben wenigstens einer der äußeren Lagen (3) angeordnet ist,

**dadurch gekennzeichnet, dass** die innere Lage aus hydrophilen Fasern (21) mit der mit chemischen Lösung imprägniert ist und wobei Rayon nicht in der hydrophilen Faser eingeschlossen ist, und

wobei die innere Lage (2) 50 Gew.-% oder mehr Zellstoff einschließt, ein Flächengewicht von 20 bis 75 g/m$^2$ aufweist und 20 bis 70 % einer Gesamtmasse des Feuchttuchs zum Reinigen (1) einnimmt.

2. Feuchttuch zum Reinigen (1) nach Anspruch 1, wobei die hydrophobe Faser der äußeren Lagen (3) Polyethylenterephthalatfasern mit einem Anteil von 80 % oder mehr einschließt und ein Faserdurchmesser der Polyethylenterephthalatfaser 3,3 dtex oder mehr beträgt.

3. Feuchttuch zum Reinigen (1) nach Anspruch 1 oder 2, umfassend einen verflochtenen Teil (31), wo die äußeren Lagen (3) und die innere Lage (2) verschlungen sind.

4. Verfahren zum Herstellen des Feuchttuchs zum Reinigen (1) nach Anspruch 3, wobei der verschlungene Teil (31) durch Wasserstrahlverschlingung gebildet wird.

## Revendications

1. Lingette humide de nettoyage (1) comprenant de multiples couches et étant imprégnée d'une solution chimique, la lingette humide de nettoyage (1) comprenant :

des couches externes (3) qui sont constituées de fibre hydrophobe et qui sont chacune disposées sur une surface avant et une surface arrière ;

une couche interne (2) qui a une fibre hydrophile et qui est disposée entre les couches externes (3),

dans laquelle la couche interne (2) est dotée d'une couche interne de fibre hydrophile (21) ayant la fibre hydrophile et d'une couche interne de fibre hydrophobe (22) ayant une fibre hydrophobe,

dans laquelle la couche interne de fibre hydrophobe (22) est adjacente à au moins l'une des couches externes (3), **caractérisée en ce que** la couche interne de fibre hydrophile (21) est imprégnée de la solution chimique et dans laquelle de la rayonne n'est

pas incorporée dans la fibre hydrophile, et

la couche interne (2) comporte de la pâte à hauteur de 50 % en poids ou plus, a un grammage de 20 à 75 g/m$^2$, et occupe 20 à 70 % d'une masse totale de la lingette humide de nettoyage (1).

2. Lingette humide de nettoyage (1) selon la revendication 1, dans laquelle la fibre hydrophobe des couches externes (3) comporte une fibre de polyéthylène téréphtalate à un taux de 80 % ou plus et un diamètre de fibre de la fibre de polyéthylène téréphtalate est de 3,3 dtex ou plus.

3. Lingette humide de nettoyage (1) selon la revendication 1 ou 2, comprenant une partie entrelacée (31) où les couches externes (3) et la couche interne (2) sont entrelacées.

4. Procédé de production de la lingette humide (1) de nettoyage selon la revendication 3, dans lequel la partie entrelacée (31) est formée par entrelacement au jet d'eau.

## FIG.1

## FIG.2

## FIG.3

## FIG.4

**REFERENCES CITED IN THE DESCRIPTION**

**Patent documents cited in the description**

- JP 4033612 B
- EP 1967626 A1